# EUROPEAN PATENT APPLICATION

(11) **EP 3 599 259 A1**
(43) Date of publication of application: **29.01.2020**
(21) Application number: 18197181.3
(22) Date of filing: 27.09.2018
(51) Int. Cl.: C08L 51/04, C08L 23/00, B33Y 70/00, B33Y 10/00, B29C 64/40, B29C 64/118, D01F 6/00

(54) **POLYSTYRENE-BASED FILAMENT FOR SUPPORT STRUCTURE IN FUSED FILAMENT FABRICATION, AND ASSOCIATED FUSED FILAMENT FABRICATION METHOD AND ARTICLE**

(30) Priority: 25.07.2018 US 201862702974 P
(71) Applicant: SABIC Global Technologies B.V., 4612 PX Bergen op Zoom (NL)
(72) Inventor: Levasalmi, Juha-Matti, Selkirk, NY 12158 (US); Liu, Ethan, Pittsfield, MA 01201 (US); Bihari, Malkvika, Mt. Vernon, IN 47620 (US)
(74) Representative: Lang, Johannes

(57) **Abstract**

A filament for use in forming a support structure in fused filament fabrication includes specific amounts of a rubber-modified polystyrene and a polyolefin. The filament minimizes or excludes polydimethylsiloxane. The composition used to form the filament exhibits a desirable combination of filament formability, printability, adhesion to a build material during printing, and separability from the build material after printing. Also described are a method of fused filament fabrication utilizing the filament, and a three-dimensional article prepared by the method.

## Description

### BACKGROUND OF THE INVENTION

Fused filament fabrication is an additive manufacturing technique that uses a combination of a build material and a support material, each provided in filament form, to produce complex three-dimensional articles. The support material is used to create a support structure that enables printing of the final article with the build material. The support structure is subsequently removed from the final article by physical separation, dissolution, or a combination of the two. An ideal support material must satisfy many different and sometimes contradictory requirements, including the ability to be readily extruded to form a high-precision filament, the ability to be printed to form a support structure, and an affinity for the build material that is sufficient to enable support of the build material during printing but not so great as to interfere with removal of the support structure from the final article. There remains a need for support materials exhibiting an improved balance of these properties.

### BRIEF SUMMARY OF EMBODIMENTS OF THE INVENTION

One embodiment is a filament for use in forming a support structure in fused filament fabrication: wherein the filament comprises, based on the weight of the filament, 96 to 99.95 weight percent of a rubber-modified polystyrene, 0.05 to 2 weight percent of a polyolefin, and 0 to 0.05 weight percent of polydimethylsiloxane; wherein the rubber-modified polystyrene comprises, based on 100 parts by weight of the rubber-modified polystyrene, 80 to 98 parts by weight polystyrene and 2 to 20 parts by weight polybutadiene; and wherein the filament has a diameter with an average of 1 to 5 millimeters, and with a standard deviation of 0.005 to 0.03 millimeters.

Another embodiment is a method of fused filament fabrication, the method comprising: melting a portion of a first filament to form a first thermally-solidifiable material in molten form, and dispensing the first thermally-solidifiable material in molten form in a predetermined pattern so as to define a three-dimensional object; and melting a portion of a second filament to form a second thermally-solidifiable material in molten form, and, in coordination with the dispensing the first thermally solidifiable material, dispensing the second thermally-solidifiable material in molten form so as to define a support structure for the three-dimensional object; wherein the first thermally-solidifiable material has a glass transition temperature or a melting temperature in a range of 85 to 160 °C; and wherein the second thermally-solidifiable material comprises, based on the total weight of the second thermally-solidifiable material, 95.95 to 99.95 weight percent of a rubber-modified polystyrene comprising, based on 100 parts by weight of the rubber-modified polystyrene, 80 to 98 parts by weight polystyrene and 2 to 20 parts by weight polybutadiene, 0.05 to 2 weight percent of a polyolefin, and 0 to 0.05 weight percent of polydimethylsiloxane.

Another embodiment is an article prepared by the method and comprising the three-dimensional object and the support structure for the three-dimensional object.

These and other embodiments are described in detail below.

### BRIEF DESCRIPTION OF THE DRAWINGS

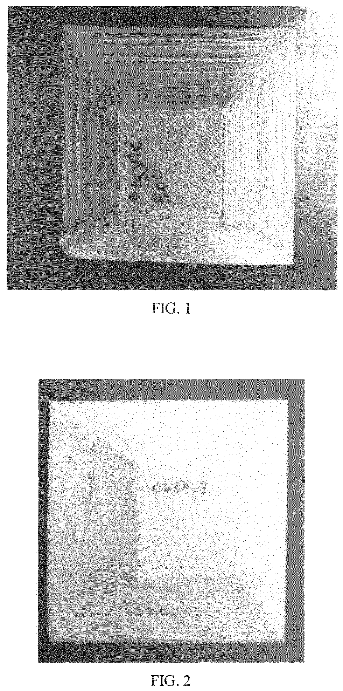

Figure 1 is an image of a test article printed using an acrylonitrile-butadiene-styrene terpolymer-based composition as the modeling material, and the Comparative Example 7 high-impact polystyrene-based, polydimethylsiloxane-containing composition as the support material.
Figure 2 is an image of a test article printed using an acrylonitrile-butadiene-styrene terpolymer-based composition as the modeling material, and the Example 4 high-impact polystyrene-based, linear low density polyethylene-containing composition as the support material.

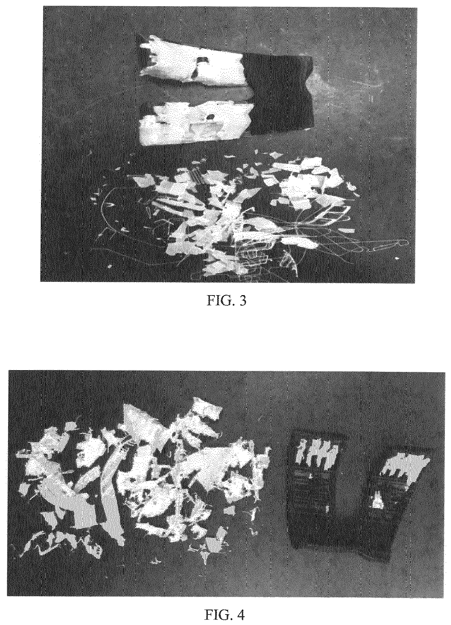

Figure 3 is an image of the product of partially physically separating a support structure from a printed model, where the modeling material (black) is an acrylonitrile-butadiene-styrene terpolymer-based composition, and the support material (white) is the Comparative Example 8 composition.
Figure 4 is an image of the product of partially physically separating a support structure from a printed model, where the modeling material (black) is an acrylonitrile-butadiene-styrene terpolymer-based composition, and the support material (white) is the Example 4 composition.

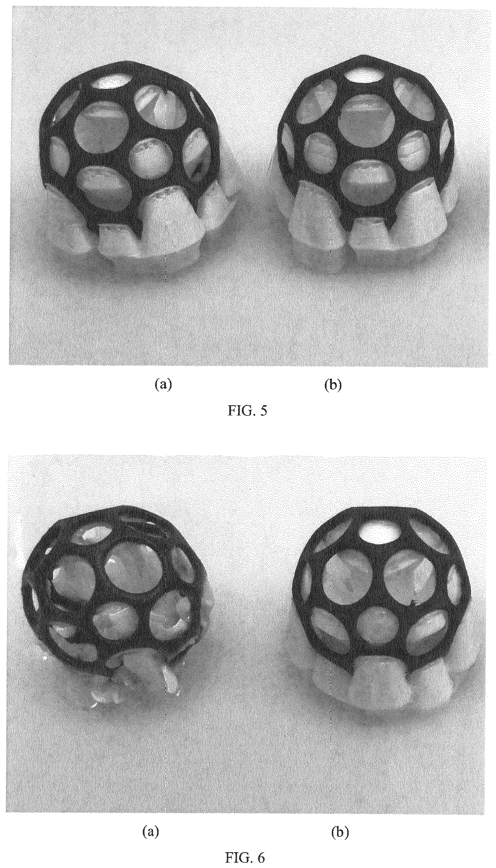

Figure 5 is an image of test articles before exposure to dissolution media (i.e., at time zero); in parts (a) and (b) of the figure, the black build material is an acrylonitrile-butadiene-styrene terpolymer-based composition; in part (a) of the figure, the white support material is the HIPS-based Example 4 composition; in part (b), the white support material is the acrylic-based Comparative Example 8 composition.
Figure 6 is an image of test articles after 30 minutes exposure to dissolution media; in parts (a) and (b) of the figure, the black build material is an acrylonitrile-butadiene-styrene terpolymer-based composition; in part (a) of the figure, the white support material is the HIPS-based Example 4 composition; in part (b), the white support material is the acrylic-based Comparative Example 8 composition.

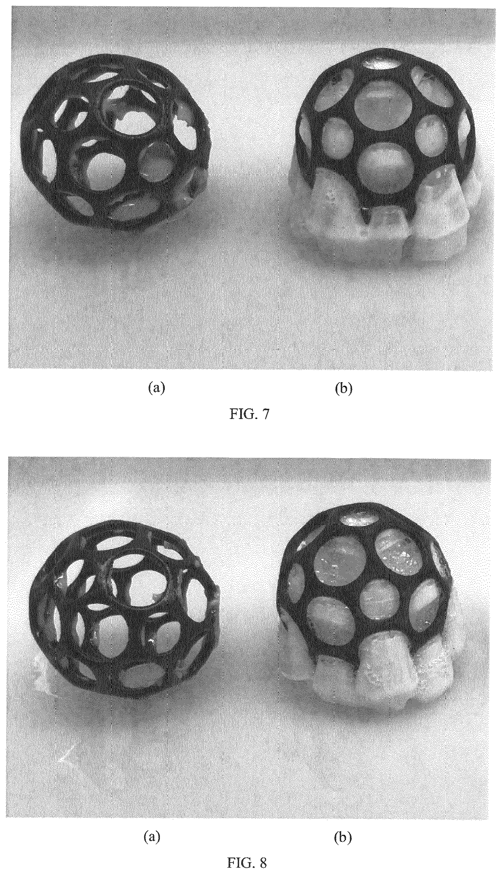

Figure 7 is an image of test articles after 60 minutes exposure to dissolution media; in parts (a) and (b) of the figure, the black build material is an acrylonitrile-butadiene-styrene terpolymer-based composition; in part (a) of the figure, the white support material is the HIPS-based Example 4 composition; in part (b), the white support material is the acrylic-based Comparative Example 8 composition.
Figure 8 is an image of test articles after 120 minutes exposure to dissolution media; in parts (a) and (b) of the figure, the black build materials is an acrylonitrile-butadiene-styrene terpolymer-based composition; in part (a) of the figure, the white support material is the HIPS-based Example 4 composition; in part (b), the white support material is the acrylic-based Comparative Example 8 composition.

### DETAILED DESCRIPTION OF THE INVENTION

The present inventors have determined that an improved balance of filament formability, printability, adhesion to the build material during printing, and separability from the build material after printing is exhibited by a support material that is based on rubber-modified polystyrene and includes a specific amount of a polyolefin while minimizing or entirely omitting polydimethylsiloxane.

Thus, one embodiment is a filament for use in forming a support structure in fused filament fabrication: wherein the filament comprises, based on the weight of the filament, 96 to 99.95 weight percent of a rubber-modified polystyrene, 0.05 to 2 weight percent of a polyolefin, and 0 to 0.05 weight percent of polydimethylsiloxane; wherein the rubber-modified polystyrene comprises, based on 100 parts by weight of the rubber-modified polystyrene, 80 to 98 parts by weight polystyrene and 2 to 20 parts by weight polybutadiene; and wherein the filament has a diameter with an average of 1 to 5 millimeters, and with a standard deviation of 0.005 to 0.03 millimeters.

The filament comprises a rubber-modified polystyrene, also known as high-impact polystyrene or HIPS. The rubber-modified polystyrene comprises, based on 100 parts by weight of the rubber-modified polystyrene, 80 to 98 parts by weight polystyrene and 2 to 20 parts by weight polybutadiene. Within the range of 80 to 98 parts by weight, the polystyrene amount can be 90 to 90 parts by weight, or 91 to 95 parts by weight. Within the range of 2 to 20 parts by weight, the polybutadiene amount can be 4 to 16 parts by weight, or 5 to 14 parts by weight. In some embodiments, the polybutadiene comprises, based on 100 (mole) percent total of *cis* and *trans* double bonds, 85 to 100 percent *cis* double bonds and 0 to 15 percent *trans* double bonds. Within the range of 85 to 100 percent, the amount of *cis* double bonds can be 90 to 100 percent, or 95 to 100 percent, with the balance being *trans* double bonds.

The filament comprises the rubber-modified polystyrene in an amount of 95.95 to 99.95 weight percent, based on the weight of the filament. Within this range, the rubber-modified polystyrene can be 97 to 99.5 weight percent, or 97.5 to 99.2 weight percent.

In addition to the rubber-modified polystyrene, the filament comprises a polyolefin. Suitable polyolefins include homopolymers and copolymers of ethylene with one or more C₃-C₁₂ alpha-olefins (including copolymers of ethylene with propylene, 1-butene, 4-methylpentene, 1-hexene, 1-octene, or a combination of at least two the foregoing). Copolymers of ethylene with a C₃-C₁₂ alpha-olefin include linear low density polyethylenes, which are copolymers of ethylene with 1-butene, 1-hexene, 1-octene, or a combination of at least two of the foregoing. In some embodiments, the polyolefin comprises a linear low density polyethylene that is a copolymer of ethylene with 1-butene.

The filament comprises the polyolefin in an amount of 0.05 to 2 weight percent, based on the weight of the filament. Within this range, the polyolefin amount can be 0.2 to 1.5 weight percent, or 0.5 to 1.2 weight percent, based on the weight of the filament.

The filament has a diameter with an average in the range of 1 to 5 millimeters, and with a standard deviation in the range of 0.001 to 0.03 millimeter. Within the range of 1 to 5 millimeters, the average diameter can be in the range of 1 to 3 millimeters, or 1.5 to 2 millimeters. Within the range of 0.001 to 0.03 millimeter, the standard deviation of the filament can be in the range of 0.001 to 0.02 millimeter.

The filament can, optionally, further comprise one or more additives known in the thermoplastics art. Such additives can include, for example, stabilizers, antioxidants, dyes, pigments, anti-static agents, mineral oil, metal deactivators, and combinations thereof. When present, the one or more additives can be used in a total amount of up to 2 weight percent, based on the weight of the filament. Within this range, the additive amount can be up to 1 weight percent, or 0.2 to 1 weight percent.

The filament optionally further comprises up to 0.05 weight percent polydimethylsiloxane, based on the weight of the filament. Within this range, the polydimethylsiloxane amount can be 0 to 0.02 weight percent, or 0 to 0.01 weight percent, or 0 weight percent.

In some embodiments, the filament comprises homopolystyrenes in an amount of less than or equal to 2 weight percent, or less than or equal to 0.2 weight percent, or less than or equal to 0.05 weight percent, or zero weight percent. In some embodiments, the filament comprises unhydrogenated block copolymers of styrene and a conjugated diene (e.g., butadiene, isoprene) in an amount of less than or equal to 2 weight percent, or less than or equal to 0.2 weight percent, or less than or equal to 0.05 weight percent, or zero weight percent. In some embodiments, the filament comprises hydrogenated block copolymers of styrene and a conjugated diene (e.g., butadiene, isoprene) in an amount of less than or equal to 2 weight percent, or less than or equal to 0.2 weight percent, or less than or equal to 0.05 weight percent, or zero weight percent. In some embodiments, the filament comprises poly(arylene ether)s in an amount of less than or equal to 2 weight percent, or less than or equal to 0.2 weight percent, or less than or equal to 0.05 weight percent, or zero weight percent. In some embodiments, the filament comprises polyolefins other than a copolymer of ethylene and 1-butene in an amount of less than or equal to 2 weight percent, or less than or equal to 0.2 weight percent, or less than or equal to 0.05 weight percent, or zero weight percent. In some embodiments, the filament comprises polyamides in an amount of less than or equal to 2 weight percent, or less than or equal to 0.2 weight percent, or less than or equal to 0.05 weight percent, or zero weight percent.

In a very specific embodiment of the filament, it comprises, based on the weight of the filament, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; the polybutadiene comprises, based on 100 percent total of *cis* and *trans* double bonds, 85 to 100 percent *cis* double bonds and 0 to 15 percent *trans* double bonds; and the polyolefin comprises a linear low density polyethylene.

Another embodiment is a method of fused filament fabrication, the method comprising: melting a portion of a first filament to form a first thermally-solidifiable material in molten form, and dispensing the first thermally-solidifiable material in molten form in a predetermined pattern so as to define a three-dimensional object; and melting a portion of a second filament to form a second thermally-solidifiable material in molten form, and, in coordination with the dispensing the first thermally solidifiable material, dispensing the second thermally-solidifiable material in molten form so as to define a support structure for the three-dimensional object; wherein the first thermally-solidifiable material has a glass transition temperature or a melting temperature in a range of 85 to 160 °C; and wherein the second thermally-solidifiable material comprises, based on the total weight of the second thermally-solidifiable material, 95.95 to 99.95 weight percent of a rubber-modified polystyrene comprising, based on 100 parts by weight of the rubber-modified polystyrene, 80 to 98 parts by weight polystyrene and 2 to 20 parts by weight polybutadiene, 0.05 to 2 weight percent of a polyolefin, and 0 to 0.05 weight percent of polydimethylsiloxane. As used herein, a "thermally-solidifiable material" is a material capable of being solidified on cooling from a molten state.

In some embodiments, the method further comprises physically separating at least a portion of the support structure from the three-dimensional object. In some embodiments, the method further comprises dissolving at least a portion of the support structure in a solvent selected from the group consisting of limonenes, terpinenes, cymenes, phellandrenes, cinnamaldehydes, other essential oils, tetrahydrofuran, *N,N*-dimethylformamide, toluene, xylenes, n-butyl acetate, n-propyl propionate, n-butyl propionate, 3-ethoxypropionic acid ethyl ester, diisobutyl ketone, methyl amyl ketone, and combinations thereof. It will be understood that essential oils such as limonenes, terpinenes, cymenes, phellandrenes, and cinnamaldehydes can be used in the form of one or more of their isomers. In some embodiments, the method further comprises a combination of physically separating and dissolving the support structure. In some embodiments, the solvent is selected from the group consisting of limonenes, terpinenes, cymenes, phellandrenes, cinnamaldehydes, other essential oils, tetrahydrofuran, *N,N-*dimethylformamide, toluene, and combinations thereof.

The first thermally-solidifiable material has a glass transition temperature or a melting temperature in a range of 85 to 160 °C. In some embodiments, the glass transition temperature or melting temperature is in a range of 95 to 115 °C. It will be understood that the first thermally-solidifiable material can have both a glass transition temperature and a melting temperature in the specified ranges. Glass transition temperatures and melting temperatures can be determined according to ASTM D3418-15 by differential scanning calorimetry using a heating rate of 20 °C/minute. In some embodiments of the method, the first thermally-solidifiable material comprises acrylonitrile-butadiene-styrene terpolymer.

All of the variations in support material described above in the context of the support filament apply as well to the method of fused filament fabrication. For example, in some embodiments of the method, the polybutadiene comprises, based on 100 (mole) percent total of *cis* and *trans* double bonds, 85 to 100 percent *cis* double bonds and 0 to 15 percent *trans* double bonds. As another example, in some embodiments of the method, the polyolefin comprises a copolymer of ethylene with propylene, 1-butene, 4-methylpentene, 1-hexene, 1-octene, of a combination of at least two of the foregoing. In some embodiments, the polyolefin comprises a linear low density polyethylene that is a copolymer of ethylene with 1-butene.

In a very specific embodiment of the method of fused filament fabrication, the second thermally-solidifiable material comprises, based on the total weight of the second thermally-solidifiable material, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; the polybutadiene comprises, based on 100 percent total of *cis* and *trans* double bonds, 85 to 100 percent *cis* double bonds and 0 to 15 percent *trans* double bonds; and the polyolefin comprises a linear low density polyethylene.

Another embodiment is an article prepared by the method of fused filament fabrication in any of its variations and comprising the three-dimensional object and the support structure for the three-dimensional object. In this embodiment, the article can form at least part of a lighting fixture, an electrical device, a communication device, a computer, a connector, a phone, a duct, a support, a strut, a medical device, an eyeglass frame, footwear, cookware, sports equipment, handles, automotive parts, gears, gaming pieces, decorative items, sculptures, jewelry, artwork, or any combination thereof. All of the above-described variations in the filament and the method apply as well to the article.

In a very specific embodiment of the article formed by the method of fused filament fabrication, the second thermally-solidifiable material comprises, based on the total weight of the second thermally-solidifiable material, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; the polybutadiene comprises, based on 100 percent total of *cis* and *trans* double bonds, 85 to 100 percent *cis* double bonds and 0 to 15 percent *trans* double bonds; and the polyolefin comprises a linear low density polyethylene.

The invention includes at least the following embodiments.
Embodiment 1: A filament for use in forming a support structure in fused filament fabrication: wherein the filament comprises, based on the weight of the filament, 95.95 to 99.95 weight percent of a rubber-modified polystyrene, 0.05 to 2 weight percent of a polyolefin, and 0 to 0.05 weight percent of polydimethylsiloxane; wherein the rubber-modified polystyrene comprises, based on 100 parts by weight of the rubber-modified polystyrene, 80 to 98 parts by weight polystyrene and 2 to 20 parts by weight polybutadiene; and wherein the filament has a diameter with an average of 1 to 5 millimeters, and with a standard deviation of 0.005 to 0.03 millimeters.
Embodiment 2: The filament of embodiment 1, wherein the polybutadiene comprises, based on 100 percent total *of cis* and *trans* double bonds, 85 to 100 percent *cis* double bonds and 0 to 15 percent *trans* double bonds.
Embodiment 3: The filament of embodiment 1 or 2, wherein the polyolefin is selected from the group consisting of homopolymers and copolymers of ethylene with one or more C₃-C₁₂ alpha-olefins.
Embodiment 4: The filament of embodiment 1 or 2, wherein the polyolefin comprises a linear low density polyethylene.
Embodiment 5: The filament of embodiment 1, wherein the filament comprises, based on the weight of the filament, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; wherein the polybutadiene comprises, based on 100 percent total *of cis* and *trans* double bonds, 85 to 100 percent *cis* double bonds and 0 to 15 percent *trans* double bonds; and wherein the polyolefin comprises a linear low density polyethylene.
Embodiment 6: A method of fused filament fabrication, the method comprising: melting a portion of a first filament to form a first thermally-solidifiable material in molten form, and dispensing the first thermally-solidifiable material in molten form in a predetermined pattern so as to define a three-dimensional object; and melting a portion of a second filament to form a second thermally-solidifiable material in molten form, and, in coordination with the dispensing the first thermally solidifiable material, dispensing the second thermally-solidifiable material in molten form so as to define a support structure for the three-dimensional object; wherein the first thermally-solidifiable material has a glass transition temperature or a melting temperature in a range of 85 to 160 °C; and wherein the second thermally-solidifiable material comprises, based on the total weight of the second thermally-solidifiable material, 95.95 to 99.95 weight percent of a rubber-modified polystyrene comprising, based on 100 parts by weight of the rubber-modified polystyrene, 80 to 98 parts by weight polystyrene and 2 to 20 parts by weight polybutadiene, 0.05 to 2 weight percent of a polyolefin, and 0 to 0.05 weight percent of polydimethylsiloxane.
Embodiment 7: The method of embodiment 6, further comprising physically separating at least a portion of the support structure from the three-dimensional object.
Embodiment 8: The method of embodiment 6 or 7, further comprising dissolving at least a portion of the support structure in a solvent selected from the group consisting of limonenes, terpinenes, cymenes, phellandrenes, cinnamaldehydes, tetrahydrofuran, N,N-dimethylformamide, toluene, and combinations thereof.
Embodiment 9: The method of any one of embodiments 6-8, wherein the first thermally-solidifiable material comprises acrylonitrile-butadiene-styrene terpolymer.
Embodiment 10: The method of any one of embodiments 6-9, wherein the polybutadiene comprises, based on 100 percent total of *cis* and *trans* double bonds, 85 to 100 percent *cis* double bonds and 0 to 15 percent *trans* double bonds.
Embodiment 11: The method of any one of embodiments 6-10, wherein the polyolefin is selected from the group consisting of homopolymers and copolymers of ethylene with one or more C₃-C₁₂ alpha-olefins.
Embodiment 12: The method of any one of embodiments 6-10, wherein the polyolefin comprises a linear low density polyethylene.
Embodiment 13: The method of embodiment 6, wherein the second thermally-solidifiable material comprises, based on the total weight of the second thermally-solidifiable material, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; wherein the polybutadiene comprises, based on 100 percent total of *cis* and *trans* double bonds, 85 to 100 percent *cis* double bonds and 0 to 15 percent *trans* double bonds; and wherein the polyolefin comprise a linear low density polyethylene.
Embodiment 14: An article prepared by the method of any one of embodiments 6 and 9-13 and comprising the three-dimensional object and the support structure for the three-dimensional object.
Embodiment 15: The article of embodiment 14, wherein the second thermally-solidifiable material comprises, based on the total weight of the second thermally-solidifiable material, 97.38 to 99.4 weight percent of the rubber-modified polystyrene, 0.4 to 1.6 weight percent of the polyolefin, 0.2 to 1 weight percent of an additive selected from the group consisting of stabilizers, antioxidants, dyes, pigments, anti-static agents, mineral oil, metal deactivators, and combinations thereof, and 0 to 0.02 weight percent of the polydimethylsiloxane; wherein the polybutadiene comprises, based on 100 percent total of *cis* and *trans* double bonds, 85 to 100 percent *cis* double bonds and 0 to 15 percent *trans* double bonds; and wherein the polyolefin comprise a linear low density polyethylene.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Materials used to prepare filaments are summarized in Table 1.

**Table 1**

| Component | Description |
|---|---|
| HIPS 1 | High-impact polystyrene, CAS Reg. No. 9003-55-8, having a polystyrene content of about 88-91 percent and a polybutadiene content of about 9-12 percent, wherein the polybutadiene comprises about 95-99 percent *cis* double bonds and about 1-5 percent *trans* double bonds; obtained as HIPS ET60 resin from Idemitsu PS, or as SUPREMEM HIPS SH3114 from Supreme Petrochem Ltd. |
| HIPS 2 | High-impact polystyrene, CAS Reg. No. 9003-55-8, having a polystyrene content of about 88-91 percent and a partially saturated rubber content of about 9-12 percent; obtained as Polystyrene 960EPO resin from Total Petrochemicals. |
| PPE | Poly(2,6-dimethyl-1,4-phenylene ether), CAS Reg. No. 25134-01-4; obtained as NORYL™ 646-111 resin from SABIC. |
| ZnS | Zinc Sulfide, CAS Reg. No. 1314-98-3; obtained as SACHTOLITH™ HD-S from Sachtleben. |
| ZnO | Zinc Oxide, CAS Reg. No. 1314-13-2; obtained as Zinc Oxide CR-4 from GH Chemical. |
| TBPP | Tris(2,4-di-t-butylphenyl)phosphite, CAS Reg. No. 31570-04-4; obtained as IRGAFOS™ 168 from Ciba Specialty Chemicals. |
| PHBPP | Pentaerythritol tetrakis(3-(3,5-di-tert-butyl-4-hydroxyphenyl)propionate), CAS Reg. No. 6683-19-8; obtained as IRGANOX™ 1010 from Ciba Specialty Chemicals. |
| LLDPE | Ethylene 1-butene copolymer, CAS Reg. No. 25087-34-7; obtained as ESCORENE™ LL-5100.09 resin from ExxonMobil. |
| PETS | Pentaerythritol tetrastearate, CAS Reg. No. 115-83-3; obtained as PETS G from FACI. |
| EBS | Ethylene bisstearamide, CAS Reg. No. 110-30-5; obtained as ACRAWAX™ C from Lonza. |
| Zn stearate | Zinc Stearate, CAS Reg. No. 557-05-1; obtained as Zinc Stearate USP from Synpro. |

Compositions used to prepare filaments are summarized in Table 2, where component amounts are expressed in units of weight percent based on the total weight of the composition. Compounding was performed using a Werner & Pfleiderer 30 millimeter co-rotating two-lope twin-screw extruder operating at 300 rotations per minute, a throughput of 18.1 kilograms/hour, and a vacuum of 610 millimeters of mercury. Barrel set temperatures were 210-230-230-230-265-265 °C from feed throat to die. All components were dry-blended before addition to the feed throat. The extrudate was cooled and pelletized.

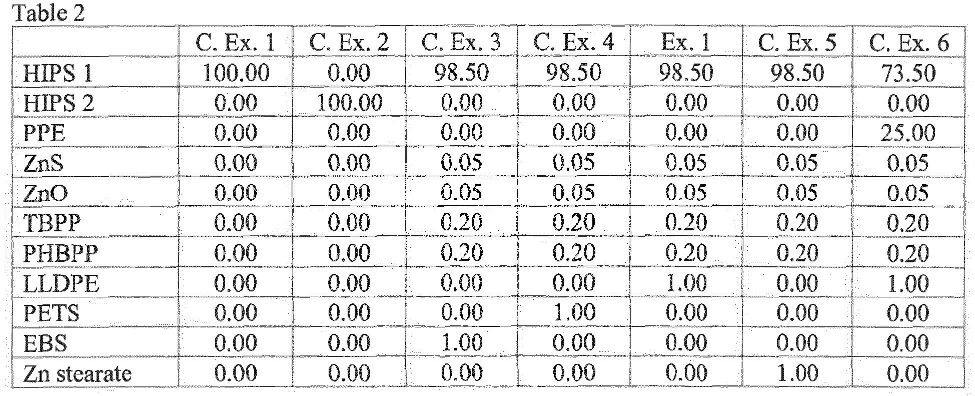

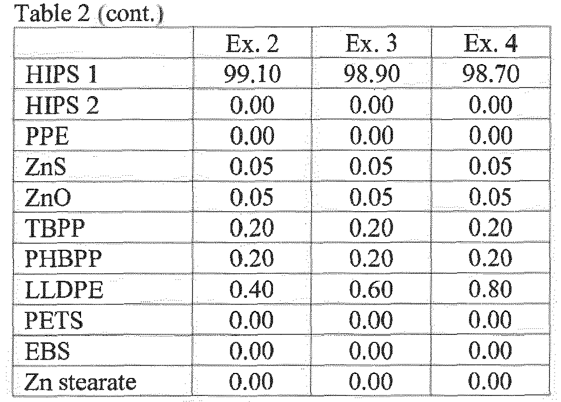

Pellets were loaded into a desiccant dryer (Dri-Air; East Windsor, Connecticut, USA) a day before filament extrusion. All resin samples were run into a filament though an extruder (FET, Leeds, UK) equipped with a precision melt pump. The screw for this extruder had a length to diameter ratio of 30:1, with lengths of 10D in the convey zone, 12D in the transition zone, and 8D in the metering section. The melt temperatures were set at about 230 °C. The extrudate exited vertically out of a four times 16 millimeter die and was stretched to form monofilament while being air cooled. The puller line speed was adjusted to achieve a final filament diameter of 1.8 millimeters. On-line diameter measurements were acquired using a dual-axis high speed and high precision scanning micrometer (Keyence; Itasca, Illinois, USA).

Experimental structures with breakaway support were printed on a Stratasys 400mc printer using as the model material an acrylonitrile-butadiene-styrene terpolymer (ABS) filament obtained as ABS-M30 from Stratasys. Support structures were printed under the SR-30 temperature profile. Filaments prepared from the compositions of Examples 1-4 and Comparative Examples 1-6 were used as the support material. Under the ABS temperature profile, a T16 tip was used to print the model, and a T12SR30 tip was used to print basic, smart, and sparse support structures. As additional comparisons, experimental structures were printed, again using ABS-M30 as the model material, and using two commercially available filaments as the support material. The first commercially available support filament was a high-impact polystyrene-based, 1.75 millimeter diameter filament obtained as Argyle Break Away Support from Argyle Materials (Comparative Example 7). The second commercially available support filament was a poly(methacrylic acid-styrene-butyl acrylate)-based, 1.79 millimeter diameter filament obtained as SR-30 Soluble Support from Stratasys (Comparative Example 8). Proton nuclear magnetic resonance spectroscopic analysis of the Argyle Break Away Support indicated that its high-impact polystyrene contained 2.7 weight percent polybutadiene having an approximately 50:50 ratio of *cis* and *trans* double bonds. The analysis further indicated the presence of about 0.09 weight percent polydimethylsiloxane (PDMS).

In Table 3, a "Filament extrusion" rating of "ok" indicates that the composition was extruded to within 0.03 millimeter of the target diameter of 1.80 millimeters, with a standard deviation less than or equal to 0.011 millimeter. "Filament diameter, avg. (mm)" and "Filament diameter, std. dev. (mm)" are the average and standard deviation, respectively, for filament diameter calculated from 50,000 diameter measurements by the scanning micrometer. "Printing performance" ratings account for the following printing factors: tool path tracking, self- and cross-adhesion, overhang catch (at 15, 30, 45, and 50 degrees), surface quality, and ability to support printing the design. A printing performance rating of "-" indicates the composition could not be printed due to poor self-adhesion, poor overhang catch, and/or poor surface quality; "+" indicates good self-adhesion, but poor overhang catch and/or poor surface quality; "++" indicates good self-adhesion, good overhang catch at 15, 30, and 45 degrees (but not 50 degrees), good surface quality, and good ability to support several designs; and "+++" indicates good self adhesion, good overhang catch at 15, 30, 45, and 50 degrees, good surface quality, and good ability to support several designs. "Ease of BASS removal" is the ease of mechanical removal of the Break Away Support Structure (BASS). While high-impact polystyrene can be dissolved in d-limonene, and acrylic copolymers can be dissolved in alkaline solutions, the ability to manually break away portions of the support structure prior to placing the printed part into the dissolution bath is critical to speeding up support structure removal. The ease of removal was evaluated both quantitatively (peak force in lap shear part tensile pull at 1 millimeter/minute) and qualitatively (pliability, ease of breaking into, effort needed to remove, and size of pieces breaking off). An ease of BASS removal rating of "-" indicates poor pliability, difficulty breaking into the support structure, inability to remove all support structure, and support structure removal in small pieces; "0" indicates poor pliability, difficulty breaking into the support structure, difficulty removing all support structure, and/or support structure removal in small pieces; "+" indicates poor pliability, ease of breaking into support structure, difficulty removing all support structure, and/or support structure removal in small pieces; "++" indicates moderate pliability, ease of breaking into support structure, ease of removal of all support structure, and/or support structure removal in medium sized pieces; and "+++" indicates good pliability, ease of breaking into support structure, ease of removal of all support structure, and comes off in large pieces. "Overall performance" accounts for ease of filament extrusion, printing performance, and ease of BASS removal. An overall performance rating of "0" indicates the composition can be extruded to a targeted diameter within +/- 0.010 millimeter and with a standard deviation of within 0.010 millimeter, acceptable printing, but difficult support structure removal; "+" indicates the composition can be extruded to a targeted diameter within +/- 0.010 millimeter and with a standard deviation of within 0.010 millimeter, good printing, but difficult support structure removal; "++" indicates the composition can easily be extruded to a targeted diameter within +/- 0.010 millimeter and with a standard deviation of within 0.010 millimeter, good printing, and manageable support structure removal; and "+++" indicates the composition can easily be extruded to a targeted diameter within +/- 0.010 millimeter and with a standard deviation of within 0.010 millimeter, good printing, and easy support structure removal.

The HIPS-based, PDMS-containing composition of Comparative Example 7 performed well in ease of BASS removal, but it suffered from printing inconsistences, particularly when printing support structures with overhangs as shown in Figure 1. In contrast, Figure 2 illustrates the much better printing performance obtained when the support material was the Example 4 HIPS-based, LLDPE-containing composition. The acrylic-based support composition of Comparative Example 8 exhibited good printing performance, but performed poorly in ease of BASS removal. Compared to the Example 4 material, BASS removal of the Comparative Example 8 material was more time consuming, and resulted in smaller pieces of the removed support. The latter effect is evident in Figure 3 (Comparative Example 8) and Figure 4 (Example 4), where the modeling material is black and the support materials are white.

The effect of HIPS resin type is illustrated by Comparative Examples 1 and 2. The Comparative Example 2 HIPS resin with about 2 micrometer partially saturated (i.e., containing a mixture of polybutadiene and poly(ethylene-butylene) residues) rubber particles is more ductile than the Comparative Example 1 HIPS resin with about 0.2-2 micrometer unsaturated (polybutadiene) rubber particles with a high *cis* content. But in physical removal of the support structure, the Comparative Example 2 structures came off in undesirably small pieces. In contrast, the Comparative Example 1 resin exhibited better pliability, and its support structures could be physically removed in large pieces. The Comparative Example 1 resin was therefore the preferred base resin.

Example 1 and Comparative Examples 3-5 illustrate the effect of release agent type at 1 weight percent. All of the compositions performed well in filament extrusion and printing performance. For ease of BASS removal, Comparative Examples 3-5 with EBS, PETS, and Zn stearate earned ratings of "+". Example 1 with LLDPE earned a superior "++" rating.

Comparative Example 6 illustrates the effect of replacing 20% of the HIPS resin with PPE. Relative to the "++" rating for Example 1 without PPE, the PPE-containing Comparative Example 6 earned a much worse rating of "0".

Examples 1-4 illustrate the effect of LLDPE loading. The printing performance suffers from increased loading level of LLDPE, while the ease of removal benefits from it. Example 4 with 0.8 weight percent LLDPE gives the best balance of printing performance and ease of removal. The Example 4 composition is superior to the HIPS-based, PDMS-containing Comparative Example 7 composition in printing performance, and superior to the acrylic-based Comparative Example 8 composition in ease of removal.

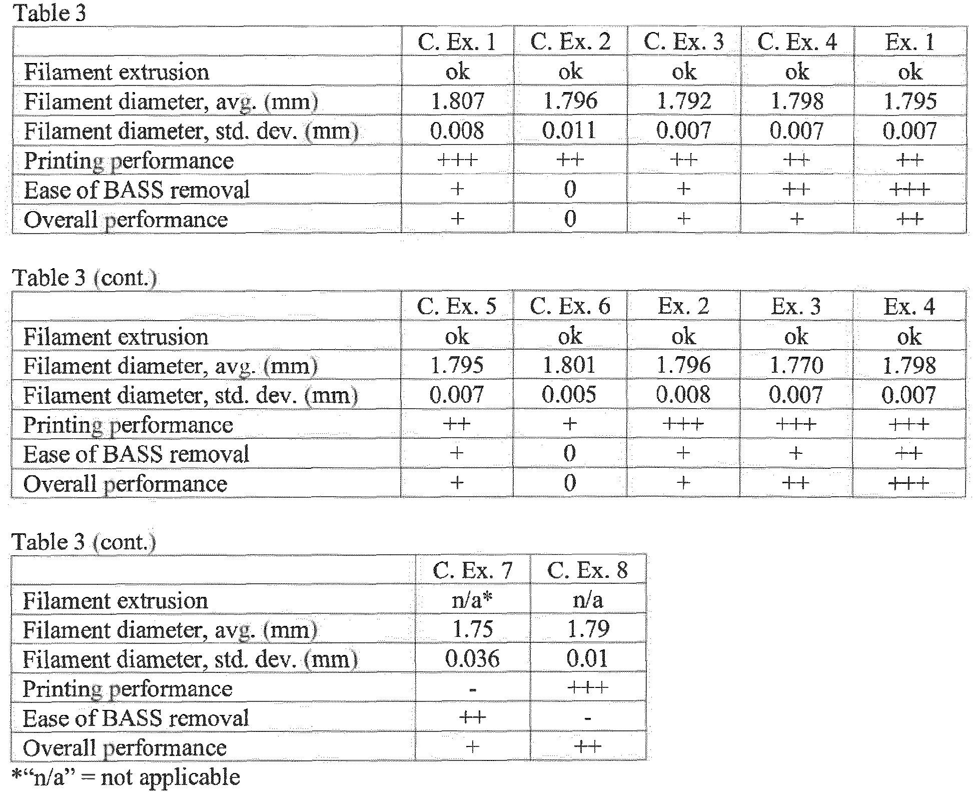

For the Example 4, Comparative Example 7, and Comparative Example 8 support compositions, Table 4 below shows the peak force (in Newtons) experienced in a lap shear part tensile pull conducted according to ASTM 3163-01(2014) at 23 °C and a rate of 1 millimeter/minute. Higher peak forces are associated with higher levels of adhesion between the build material and the support material in a simple, flat interface. The results show that the peak force for the acrylic-based Comparative Example 8 composition was much larger than the peak forces for the LLDPE-containing Example 1 composition and the PDMS-containing Comparative Example 7 composition. These results are consistent with the greater ease of physical removal observed for support structures printed from the Example 1 composition and the Comparative Example 7 composition relative to the Comparative Example 8 composition.

**Table 4**

| | Ex. 1 | C. Ex. 7 | C. Ex. 8 |
|---|---|---|---|
| Tensile pull peak force (N) | 310 | 270 | 930 |

Qualitative rates of dissolution were determined for support structures printed from the HIPS-based Example 4 composition and the acrylic-based Comparative Example 8 composition. Each test article contained 16.4 cubic centimeters (1.0 cubic inch) of build material and 27.9 cubic centimeters (1.7 cubic inches) of support material. Figures 5-8 are images of test articles after exposure to the dissolution media for zero minutes (Figure 5), 30 minutes (Figure 6), 60 minutes (Figure 7), and 120 minutes (Figure 8). In each figure, the black portion of each test article is the ABS-based build material. In part (a) of each figure, the white support material is the HIPS-based Example 4 composition; in part (b), the white support material is the acrylic-based Comparative Example 8 composition. For the HIPS-based Example 4 composition, the dissolution medium was 400 milliliters of d-limonene, and dissolution was conducted at 23 °C with magnetic stirring. For the acrylic-based Comparative Example 8 composition, the dissolution medium was 400 milliliters of a sodium hydroxide solution with less than 5% anionic surfactants, polycarboxylates, and non-ionic surfactants obtained as WaterWorks™ P400SC from Stratasys and diluted in tap water to the recommended concentration, and dissolution was conducted at 50 °C with magnetic stirring. As is evident from Figures 5-8, the HIPS-based Example 4 composition completely dissolved after two hours in d-limonene at 23 °C, while the acrylic-based Comparative Example 8 composition exhibited much slower dissolution in the alkaline aqueous solution at 50 °C. The test articles with acrylic-based support material were also observed to partially float in the alkaline aqueous solution.

## Claims

1. A filament for use in forming a support structure in fused filament fabrication:
wherein the filament comprises, based on the weight of the filament,
95.95 to 99.95 weight percent of a rubber-modified polystyrene,
0.05 to 2 weight percent of a polyolefin, and
0 to 0.05 weight percent of polydimethylsiloxane;
wherein the rubber-modified polystyrene comprises, based on 100 parts by weight of the rubber-modified polystyrene, 80 to 98 parts by weight polystyrene and 2 to 20 parts by weight polybutadiene; and
wherein the filament has a diameter with an average of 1 to 5 millimeters, and with a standard deviation of 0.005 to 0.03 millimeters.

2. The filament of claim 1, wherein the polybutadiene comprises, based on 100 percent total of *cis* and *trans* double bonds, 85 to 100 percent *cis* double bonds and 0 to 15 percent *trans* double bonds.

3. The filament of claim 1 or 2, wherein the polyolefin is selected from the group consisting of homopolymers and copolymers of ethylene with one or more C₃-C₁₂ alpha-olefins.

4. The filament of claim 1 or 2, wherein the polyolefin comprises a linear low density polyethylene.

5. The filament of claim 1,
wherein the filament comprises, based on the weight of the filament,
97.38 to 99.4 weight percent of the rubber-modified polystyrene,
0.4 to 1.6 weight percent of the polyolefin,
0.2 to 1 weight percent of an additive selected from the group consisting of stabilizers, antioxidants, dyes, pigments, anti-static agents, mineral oil, metal deactivators, and combinations thereof, and
0 to 0.02 weight percent of the polydimethylsiloxane;
wherein the polybutadiene comprises, based on 100 percent total of *cis* and *trans* double bonds, 85 to 100 percent *cis* double bonds and 0 to 15 percent *trans* double bonds; and
wherein the polyolefin comprise a linear low density polyethylene.

6. A method of fused filament fabrication, the method comprising:
melting a portion of a first filament to form a first thermally-solidifiable material in molten form, and dispensing the first thermally-solidifiable material in molten form in a predetermined pattern so as to define a three-dimensional object; and
melting a portion of a second filament to form a second thermally-solidifiable material in molten form, and, in coordination with the dispensing the first thermally solidifiable material, dispensing the second thermally-solidifiable material in molten form so as to define a support structure for the three-dimensional object;
wherein the first thermally-solidifiable material has a glass transition temperature or a melting temperature in a range of 85 to 160 °C; and
wherein the second thermally-solidifiable material comprises, based on the total weight of the second thermally-solidifiable material,
95.95 to 99.95 weight percent of a rubber-modified polystyrene comprising, based on 100 parts by weight of the rubber-modified polystyrene, 80 to 98 parts by weight polystyrene and 2 to 20 parts by weight polybutadiene,
0.05 to 2 weight percent of a polyolefin, and
0 to 0.05 weight percent of polydimethylsiloxane.

7. The method of claim 6, further comprising physically separating at least a portion of the support structure from the three-dimensional object.

8. The method of claim 6 or 7, further comprising dissolving at least a portion of the support structure in a solvent selected from the group consisting of limonenes, terpinenes, cymenes, phellandrenes, cinnamaldehydes, tetrahydrofuran, N,N-dimethylformamide, toluene, and combinations thereof.

9. The method of any one of claims 6-8, wherein the first thermally-solidifiable material comprises acrylonitrile-butadiene-styrene terpolymer.

10. The method of any one of claims 6-9, wherein the polybutadiene comprises, based on 100 percent total of *cis* and *trans* double bonds, 85 to 100 percent *cis* double bonds and 0 to 15 percent *trans* double bonds.

11. The method of any one of claims 6-10, wherein the polyolefin is selected from the group consisting of homopolymers and copolymers of ethylene with one or more C₃-C₁₂ alpha-olefins.

12. The method of any one of claims 6-10, wherein the polyolefin comprise a linear low density polyethylene.

13. The method of claim 6,
wherein the second thermally-solidifiable material comprises, based on the total weight of the second thermally-solidifiable material,
97.38 to 99.4 weight percent of the rubber-modified polystyrene,
0.4 to 1.6 weight percent of the polyolefin,
0.2 to 1 weight percent of an additive selected from the group consisting of stabilizers, antioxidants, dyes, pigments, anti-static agents, mineral oil, metal deactivators, and combinations thereof, and
0 to 0.02 weight percent of the polydimethylsiloxane;
wherein the polybutadiene comprises, based on 100 percent total of *cis* and *trans* double bonds, 85 to 100 percent *cis* double bonds and 0 to 15 percent *trans* double bonds; and
wherein the polyolefin comprise a linear low density polyethylene.

14. An article prepared by the method of any one of claims 6 and 9-13 and comprising the three-dimensional object and the support structure for the three-dimensional object.

15. The article of claim 14,
wherein the second thermally-solidifiable material comprises, based on the total weight of the second thermally-solidifiable material,
97.38 to 99.4 weight percent of the rubber-modified polystyrene,
0.4 to 1.6 weight percent of the polyolefin,
0.2 to 1 weight percent of an additive selected from the group consisting of stabilizers, antioxidants, dyes, pigments, anti-static agents, mineral oil, metal deactivators, and combinations thereof, and
0 to 0.02 weight percent of the polydimethylsiloxane;
wherein the polybutadiene comprises, based on 100 percent total of *cis* and *trans* double bonds, 85 to 100 percent *cis* double bonds and 0 to 15 percent *trans* double bonds; and
wherein the polyolefin comprise a linear low density polyethylene.
